# EUROPÄISCHE PATENTSCHRIFT

(11) **EP 0 600 461 B1**
(45) Veröffentlichungstag und Bekanntmachung des Hinweises auf die Patenterteilung: **10.06.1998**
(21) Anmeldenummer: 93119359.3
(22) Anmeldetag: 01.12.1993
(51) Int. Cl.: C08L 23/10, D01F 6/06

(54) **Verwendung einer Polyolefinformmasse zur Herstellung von Fasern, Filamenten und Vliesen mittels Schmelzspinnverfahren**
Use of a polyolefin moulding composition for making fibres filaments and non-wovens by melt spinning processes
Utilisation d'une composition de moulage à base de polyoléfine pour la fabrication de fibres, filaments et non-tissés par des procédé de filage au fondu

(30) Priorität: 02.12.1992 DE 4240411
(43) Veröffentlichungstag der Anmeldung: 08.06.1994
(73) Patentinhaber: TARGOR GmbH, 55116 Mainz (DE)
(72) Erfinder: Winter, Andreas, Dr., D-61479 Glashütten/Ts. (DE); Vollmar, Annette, D-60385 Frankfurt am Main (DE); Kloos, Friedrich, Dr., D-55128 Mainz (DE); Bachmann, Bernd, Dr., D-65817 Eppstein/Taunus (DE)

(56) Entgegenhaltungen:
- EP-A- 0 028 844
- EP-A- 0 111 383
- EP-A- 0 302 424
- EP-A- 0 485 823
- EP-A- 0 593 888
- WO-A-94/28219

## Beschreibung

Die Erfindung bezieht sich auf die Verwendung einer Polyolefin-Formmasse zur Herstellung von Fasern, Filamenten und Vliesen.

Die Verwendung von Polyolefinen in Schmelzspinnverfahren ist bekannt. Verwendet werden für solche Anwendungen Polyolefine, beispielsweise Polypropylene, die nach der Polymerisation mittels eines Peroxides in einem zusätzlichen Verfahrensschritt chemisch behandelt werden.

Diese als CR-Polymere (CR = controlled rheology) bezeichneten Formmassen weisen zwei gravierende Nachteile auf:
1) der zusätzliche Peroxid-Verfahrensschritt verteuert die Produkte und
2) durch die Umsetzung mit Peroxid entstehen niedermolekulare Fragmente, die einen unangenehmen Geruch haben, den auch die aus dem Polymer hergestellte Faser aufweisen kann.

Zusätzlich kann das Peroxid-Verfahren auch noch eine Gelbverfärbung des Polymeren verursachen.

Für Schnellspinnanwendungen sind solche Produkte nur bedingt geeignet (Gefahr des Fadenabrisses). Polyolefine, beispielsweise Polypropylene, ohne chemische Behandlung mit Peroxid (EP-A-0 028 844) sind für Schnellspinnverfahren ungeeignet, Fadenabriß tritt dort bereits schon bei niedrigen Fadenabzugsgeschwindigkeiten auf.

Aufgabe der vorliegenden Erfindung war somit die Bereitstellung einer Formmasse, welche die aus dem Stand der Technik bekannten nachteiligen Eigenschaften nicht aufweist, das heißt eine Formmasse, die den nachteiligen Peroxid-Verfahrensschritt nicht benötigt und darüberhinaus auch in Schnellspinnverfahren eingesetzt werden kann.

Es wurde gefunden, daß bestimmte Polyolefinformmassen, die bevorzugte durch Polymerisation mit Metallocenkatalysatoren hergestellt werden können, ohne weitere Konditionierungsschritte, wie etwa einen Peroxid-Verfahrensschritt, den genannten Anforderungen genügen.

Darüberhinaus wurde überraschend gefunden, daß diese erfindungsgemäßen Polyolefinformmassen im direkten Vergleich mit herkömmlichen CR-Polymeren bei der Verarbeitung im Schmelzspinnverfahren zu Fasern, Filamenten oder Vliesen mit deutlich niedrigeren Formmassetemperaturen an der Spinndüse verarbeitet, werden können, was eine deutlich kostengünstigere Verarbeitung durch Energieeinsparung ermöglicht. Ferner zeichnen sich die mit den erfindungsgemäßen Formmassen hergestellten Fasern und Filamente durch eine deutlich höhere Fadenfestigkeit aus, daraus hergestellte Vliese sind reißfester.

Gegenstand der vorliegenden Erfindung ist somit die Verwendung einer Polyolefinformmasse, im wesentlichen bestehend aus einem Polyolefin, welches aus einem Olefin mit mindestens 3 C-Atomen der Formel R^{a}-CH = CH-R^{b}, worin R^{a} und R^{b} gleich oder verschieden sind und Wasserstoff oder C₁-C₁₅-Alkyl, geradkettig oder verzweigt, bedeuten oder R^{a} und R^{b} mit den sie verbindenden Atomen ein Ringsystem bilden, und 0 bis 10 Gew.-% Ethylen oder eines zweiten Olefins mit oben genannter Bedeutung als Comonomer besteht, dadurch gekennzeichnet, daß der MFI (230/2,16) von 5 bis 1000 g/10 min, der MFI (230/5) von 15 bis 3000 g/10 min, die Molmasse (M_{w}) von 75 000 bis 350 000 g/mol, bevorzugt 80 000 bis 250 000 g/mol, die Polydispersität (M_{w}/Mₙ) von 1,8 bis 3,5, bevorzugt 2,0 bis 3,0, die Viskositätszahl von 70 bis 300 cm³/g, bevorzugt 100 bis 250 cm³/g, der Schmelzpunkt von 120 bis 165°C, bevorzugt 140 bis 165°C, und die isotaktische Blocklänge nᵢₛₒ von 25 bis 150, bevorzugt 30 bis 150 beträgt und der etherextrahierbare Anteil kleiner ist als 2 Gew.-%, bevorzugt kleiner als 1 Gew.-%, bezogen auf die Gesamtmasse des Polymers.

Die Herstellung von Polyolefinen, die sich für die erfindungsgemäßen Formmassen eignen ist bekannt (z. B. EP 537 686 A1, EP 549 900 A1, EP 545 303 A1, EP-Anmeldung 93109966.7).
Es handelt sich dabei um hochmolekulare isotaktische Polyolefine, von denen insbesondere Polypropylen und propylenhaltige Copolymere zu nennen sind.

Außer dem Polyolefin kann die erfindungsgemäße Formmasse noch die üblichen Zusatzstoffe enthalten, beispielsweise Nukleierungsmittel, Stabilisatoren, Antioxidanten, UV-Absorber, Lichtschutzmittel, Metalldesaktivatoren, Radikalfänger, Gleitmittel, Emulgatoren, Pigmente, optische Aufheller, Flammschutzmittel oder Antistatika.

Die erfindungsgemäße Formmasse wird bevorzugt mit Metallocenkatalysatoren hergestellt, insbesondere mit Zirkonocenen, die substituierte Indenylsysteme als Liganden aufweisen.

Die erfindungsgemäße Formmasse zeichnet sich neben des Fehlens von unangenehmem Geruch und Gelbfärbung durch eine höhere Fadenfestigkeit der Filamente und Fasern und eine niedrigere Verarbeitungstemperatur im Vergleich mit konventionellen Polyolefintypen aus.
Ein besonders bevorzugtes Einsatzgebiet für die erfindungsgemäßen Formmassen ist die Anwendung in Spinnvliesverfahren und in der Filamentherstellung bei hohen Abzugsgeschwindigkeiten.

Die folgenden Beispiele sollen die Erfindung näher erläutern:
- M_{w} =: Molmassengewichtsmittel (g/mol) ermittelt durch Gelpermeationschromatographie
- M_{w}/Mₙ =: Polydispersität, ermittelt durch Gelpermeationschromatographie
- II =: Isotaktischer Index (¹³C-NMR-Spektroskopie)
- nᵢₛₒ =: Mittlere isotaktische Blocklänge (¹³C-NMR-Spektroskopie)
- n_{PE} =: Mittlere Blocklänge Polyethylen (¹³C-NMR-Spektroskopie)
- VZ =: Viskositätszahl gemessen bei 135°C, als 0,1 %ige Lösung in Decahydronaphthalin im Kapillarviskosimeter
- MFI(230/5) bzw. MFI (230/2,16) =: Schmelzindex bei 230°C, 5 bzw. 2,16 kg Belastung (DIN 53735)

Schmelzpunktbestimmung mit DSC (20°C/min)
- Titer =: Fadengewicht in g/10 000 m (dtex) 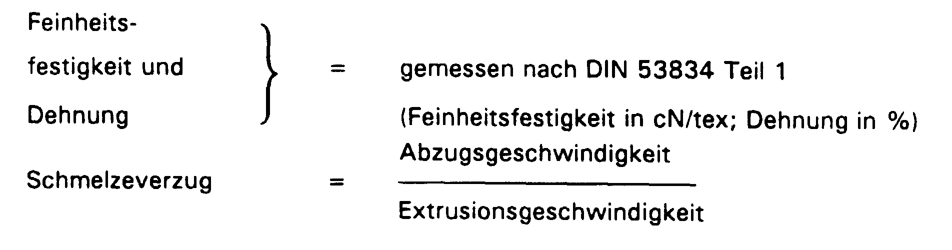
- KDH =: Kugeldruckhärte (in Anlehnung an DIN 53456; 4 mm Probekörper, 240°C Spritztemperatur)
- Zug-E-Modul =: Sekantenwert, nach DIN 53497-Z
- Izod-Schlagzähigkeit =: nach ISO 180/1C (bei 20°C gemessen)
- Normgelbwert (NG) =: nach ASTM D 1925 - 77, DIN 6167 (Probenkörper: Spritzgußplatten 80 x 80 x 2 mm)

### A Polymerisationen

Die Metallocenkatalysatoren wurden wie beispielsweise in EP 0 485 823 A1 beschrieben hergestellt. Die erfindungsgemäße Formmasse kann, solange sie der Definition ihrer Eigenschaften genügt, mit jedem geeigneten Katalysatorsystem und jedem geeigneten Polymerisationsverfahren hergestellt werden.

### Beispiel 1

Ein trockener 150 dm³-Reaktor wurde mit Propylen gespült und bei 20°C mit 80 dm³ eines Benzinschnittes mit dem Siedebereich 100 bis 120°C befüllt. Nach Zugabe von 50 l flüssigem Propylen wurden 64 cm³ Methylaluminoxanlösung (Lösung in Toluol, entsprechend 100 mmol Al) zugegeben. Der Reaktorinhalt wurde auf 40°C gebracht und es wurde Wasserstoff zudosiert, bis im Gasraum des Reaktors ein Gehalt von 1,3 Vol.-% erreicht war. 17,8 mg rac-Dimethylsilylbis(2-methyl-1-indenyl)-zirkondichlorid wurden in 32 mol toluolischer Methylaluminoxanlösung (entsprechend 50 mmol Al) aufgelöst und in den Reaktor gegeben. Unter Konstanthaltung des Wasserstoffgehalts im Reaktor bei 1,3 ± 0,5 Vol.-% wurden bei 40°C 18 h polymerisiert. Die Polymerisation wurde mit CO₂-Gas gestoppt und die Polymersuspension in einen nachgeschalteten Reaktor abgelassen. Das Suspensionsmedium wurde über eine Filterkerze und durch Wasserdampfdestillation vom Polymerpulver abgetrennt, und die wäßrige Polymersuspension über eine Druckfilternutsche vom Wasser getrennt. Bei 80°C/100 mbar wurde das Pulver 24 h getrocknet. Ausbeute: 20,5 kg.

Am Pulver wurden folgende Daten gemessen:
MFI (230/5) = 94 g/10 min; VZ = 146 cm³/g;
M_{w} = 174 500 g/mol, M_{w}/Mₙ = 2,2;
Schmelzpunkt 150°C, II = 96,5 %, nᵢₛₒ = 54.

### Beispiel 2

Beispiel 1 wurde wiederholt, es wurde jedoch eine Wasserstoffkonzentration von 2,5 ± 0,3 Vol.-% verwendet, die Metallocenmenge betrug 21,3 mg. Es wurden 22,5 kg Pulver erhalten.

Am Pulver wurden folgende Daten gemessen:
MFI (230/5) = 194 g/10 min; VZ = 125 cm³/g;
M_{w} = 148 500 g/mol, M_{w}/Mₙ = 2,2;
Schmelzpunkt 150°C, II = 96,7 %, nᵢₛₒ = 55.

### Beispiel 3

Beispiel 2 wurde wiederholt, es wurden jedoch 250 g Ethylen verteilt über die gesamte Polymerisationszeit von 15 Stunden gleichmäßig zudosiert. Es wurden 19,1 kg Pulver erhalten.

Am Pulver wurden folgende Daten gemessen:
1,2 Gew.-% Ethylengehalt, n_{PE} < 1,2 (d. h.: die Mehrzahl der Ethyleneinheiten wurde isoliert eingebaut).

MFI (230/5) = 165 g/10 min; VZ = 142 cm³/g;
M_{w} = 137 500 g/mol, M_{w}/Mₙ = 2,2;
Schmelzpunkt 148°C.

### Beispiel 4

Beispiel 2 wurde wiederholt, es wurden jedoch 7,9 mg des Metallocens rac-Dimethylsilylbis(2-methyl-4-phenyl-1-indenyl)-ZrCl₂ verwendet, die Polymerisationstemperatur war 50°C und die verwendete Wasserstoffmenge war 3,1 ± 0,4 Vol.-%.
Es wurden 18,5 kg Polymerpulver erhalten.

Am Pulver wurden folgende Daten gemessen:
MFI (230/5) = 92 g/10 min; VZ = 152 cm³/g;
M_{w} = 194 500 g/mol, M_{w}/Mₙ = 2,0;
Schmelzpunkt 159°C.

### Beispiel 5

Beispiel 3 wurde wiederholt, es wurden jedoch 750 g Ethylen verteilt über die gesamte Polymerisationszeit gleichmäßig zudosiert. Es wurden 18,2 kg Polymerpulver erhalten.

Am Pulver wurden folgende Daten gemessen:
3,3 Gew.-% Ethylengehalt, n_{PE} < 1,3 (d. h.: isolierter Einbau der meisten Ethylenmoleküle in der Polypropylenkette).

MFI (230/5) = 90 g/10 min; VZ = 170 cm³/g;
M_{w} = 198 500 g/mol, M_{w}/Mₙ = 2,1;
Schmelzpunkt 144°C.

### Beispiel 6

Beispiel 4 wurde wiederholt, die verwendete Wasserstoffmenge war jedoch 2,1 ± 0,3 Vol.-%. Es wurden 19,2 kg Polymerpulver erhalten.

Am Pulver wurden folgende Daten gemessen:
MFI (230/5) = 48 g/10 min; VZ = 167 cm³/g;
M_{w} = 225 000 g/mol, M_{w}/Mₙ = 2,0;
Schmelzpunkt 160°C.

### Beispiel 7

Ein trockener 24 dm³-Reaktor wurde mit Stickstoff gespült und mit 12 dm³ flüssigem Propylen befüllt.

Dann wurden 35 cm³ toluolische Methylaluminoxanlösung (entsprechend 52 mmol Al, mittlerer Oligomerisierungsgrad n = 20) zugegeben und der Ansatz bei 30°C 15 min gerührt.

Parallel dazu wurden 4,0 mg rac-Dimethylsilylbis(2-methyl-1-indenyl)-zirkondichlorid in 13,5 cm³ toluolischer Methylaluminoxanlösung gelöst (20 mmol Al) und durch 15 minütiges Stehenlassen voraktiviert.

Die Lösung wurde dann in den Reaktor gegeben, durch Wärmezufuhr auf 75°C aufgeheizt und das Polymerisationssystem 1 h durch Kühlung bei 78°C gehalten. Gestoppt wurde die Polymerisation durch Abgasen der überschüssigen Monomeren. Trocknen des Pulvers bei 80°C/200 mbar/24 h. Die Metallocenaktivität betrug 435 kg PP/g Metallocen x h.

VZ = 159 cm³/g; M_{w} = 161 500 g/mol, M_{w}/Mₙ = 2,1;
MFI (230/5) = 109 g/10 min;
Schmelzpunkt = 142°C, nᵢₛₒ = 36.

### Beispiel 8

Beispiel 4 wurde wiederholt, die verwendete Wasserstoffmenge war jedoch 8,7 ± 0,5 Vol.-%. Es wurden 19,9 kg Polymerpulver erhalten.

Am Pulver wurden folgende Daten gemessen:
MFI (230/2,16) = 290 g/10 min; VZ = 91 cm³/g;
M_{w} = 92 500 g/mol, M_{w}/Mₙ = 1,9;
Schmelzpunkt 161°C; II = 98,9 %, nᵢₛₒ = 127.

### B Erfindungsgemäße Formmassen und Schmelzspinnversuche (Anwendungsbeispiele)

### Beispiel 9

Verwendet wurde das Polymerpulver aus Beispiel 2, das mit 0,05 Gew.-% Penta-erithrityltetrakis[3-(3,5-di-t-butyl-4-hydroxyphenyl)propionat], 0,05 Gew.-% Tris(2,4-di-t-butylphenyl)phosphit und 0,05 Gew.-% Calziumstearat als Zusatzstoffe zur Verbesserung der Oxidationsbeständigkeit und Gleiteigenschaften vermischt wurde und mit einem Doppelschneckenextruder ZSK 28 der Fa. Werner und Pfleiderer granuliert wurde. Die Temperaturen in den fünf Heizzonen des Exdtruders waren dabei 150°C (Einzug), 220°C, 260°C, 280°C und 260°C (Düsenplatte). Die Massetemperatur betrug 265°C, die Extruderschnecken wurden mit 250 Upm. betrieben. Es wurde ein geruchloses, farbloses, wasserklares Granulat erhalten. Zur Messung der mechanischen Daten wurden normgemäße Formkörper im Spritzgußverfahren hergestellt.

An diesen Formkörpern wurden folgende charakteristische mechanischen Daten ermittelt:

MFI (230/2,16) = 59 g/10min; MFI (230/5) = 201 g/10 min; KDH (358 N) = 69 Nmm⁻²; Zug-E-Modul (Sekante) 1550 Nmm⁻², Izod Schlagzähigkeit 62 mJmm⁻²; NG = 3,7. Die Verarbeitbarkeit der Formmasse wurde an einer Laborspinnanlage überprüft (Extruder Reifenhäuser 30, Volumetrische Schmelzedosierpumpe, temperiertes Spinndüsenpaket bestehend aus 36 Düsen mit 0,4 mm Durchmesser).

Es wurde mit einer Abzugsgeschwindigkeit von 2800 m/min gearbeitet. Die Extrusionsgeschwindigkeit war 4,5 m/min, der Schmelzeverzug betrug somit 622. Die Temperatur der Formmasse am Spinndüsenpaket betrug 265°C.

An der Faser wurden folgende Daten gemessen:
Titer: 36 dtex; Feinheitsfestigkeit: 45 cN/tex, Dehnung: 89 %.

### Beispiel 10

Es wurde verfahren wie in Beispiel 9, die Temperatur der Formmasse am Düsenkopf betrug jedoch 240°C.

Faserdaten: Titer 36 dtex; Feinheitsfestigkeit 43 cN/tex, Dehnung: 87 %.

### Beispiel 11

Es wurde verfahren wir in Beispiel 9, die Temperatur der Formmasse am Düsenkopf betrug jedoch 225°C.

Faserdaten: Titer 36 dtex; Feinheitsfestigkeit 42 cN/tex, Dehnung: 85 %.

### Beispiel 12

Es wurde verfahren wir in Beispiel 9, die Temperatur der Formmasse am Düsenkopf betrug jedoch 205°C.

Faserdaten: Titer 36 dtex; Feinheitsfestigkeit 44 cN/tex, Dehnung: 87 %.

Die Beispiele 9 bis 12 belegen die Möglichkeit, die Temperatur der Formmassee ohne negative Folgen auf die Verspinnbarkeit und auf die Qualität der Faser beziehungsweise des Filaments abzusenken. Dadurch wird eine deutliche Einsparung der Energiekosten erreicht. Daß dies mit herkömmlichem Polymermaterial nicht möglich ist, belegen die Vergleichsbeispiele 1 und 2. Die Vergleichsbeispiele 3 und 4 zeigen, daß mit dem erfindungsgemäßen Formmassen eine in der Festigkeit deutlich bessere Faser beziehungsweise ein besseres Filament hergestellt werden kann.

### Vergleichsbeispiel 1

Es wurde verfahren wie in Beispiel 12, als Polymer wurde jedoch statt der erfindungsgemäßen Formmasse ein handelsüblicher Schmelzspinntyp (Hostalen PPW 1780 F1) mit folgenden Daten verwendet:
MFI (230/5) = 198 g/10 min; KDH (358 N) = 73 Nmm⁻²; Zug-E-Modul (Sekante) 1550 Nmm⁻²; Izod Schlagzähigkeit 52 mJmm⁻², NG = 5,3; M_{w} = 161 000 g/mol, M_{w}/Mₙ = 3,9.

Ein Verspinnen des Polymers war wegen Fadenabriß nicht möglich.

### Vergleichsbeispiel 2

Es wurde verfahren wie in Vergleichsbeispiel 1, die Temperatur der Formmasse am Düsenkopf betrug jedoch 225°C (wie in Beispiel 11).

Eine Verspinnbarkeit des Polymers war wegen Fadenabriß nicht möglich.

### Vergleichsbeispiel 3

Es wurde verfahren wie in Vergleichsbeispiel 1, die Temperatur der Formmasse am Düsenkopf betrug jedoch 240°C (wie in Beispiel 10).

Faserdaten: Titer 36 dtex; Feinheitsfestigkeit 28 cN/tex, Dehnung 148 %.

### Vergleichsbeispiel 4

Es wurde verfahren wie in Vergleichsbeispiel 1, die Temperatur der Formmasse am Düsenkopf betrug jedoch 265°C.

Faserdaten: Titer 36 dtex; Feinheitsfestigkeit 34 cN/tex, Dehnung 93 %.

### Beispiel 13

Beispiel 9 wurde wiederholt, es wurde jedoch das Polymerpulver aus Beispiel 1 eingesetzt. Die Massetemperatur bei der Granulierung (Temperaturen: 150°C (Einzug), 250°C, 250°C, 280°C und 260°C (Düsenplatte)) war 270°C, die Extruderschnecken wurden mit 270 Upm betrieben. Es wurde ein geruchloses, farbloses, wasserklares Granulat erhalten. Zur Messung der mechanischen Daten wurden normgemäße Formkörper im Spritzgußverfahren hergestellt.

An diesen Formkörpern wurden folgende charakteristischen mechanischen Daten ermittelt:
MFI (230/2,16) = 36 g/10 min, MFI (230/5) = 95 g/10 min;
KDH = 72 Nmm⁻²; Zug-E-Modul (Sekante) 1600 Nmm⁻²; Izod Schlagzähigkeit 54 mJmm⁻²; NG = 3,5.

Wie in Beispiel 9 wurde ein Spinnversuch durchgeführt.

Faserdaten: Titer 36 dtex, Feinheitsfestigkeit 44 cN/tex; Dehnung: 92 %.

### Beispiel 14

Beispiel 13 wurde wiederholt, die Temperatur der Formmasse am Spinndüsenpaket war jedoch 225°C.

Faserdaten: Titer 36 dtex, Feinheitsfestigkeit 43 cN/tex; Dehnung: 85 %.

### Beispiel 15

Beispiel 14 wurde wiederholt, die Fadenabzugsgeschwindigkeit betrug jedoch 2400 m/min, die Extrusionsgeschwindigkeit war 3,9 m/min.

Faserdaten: Titer 36 dtex, Feinheitsfestigkeit 40 cN/tex; Dehnung: 89 %.

### Beispiel 16

Beispiel 14 wurde wiederholt, die Extrusionsgeschwindigkeit war jedoch 3,6 m/min.

Faserdaten: Titer 29 dtex, Feinheitsfestigkeit 42 cN/tex; Dehnung: 85 %.

### Beispiel 17

Beispiel 14 wurde wiederholt, die Fadenabzugsgeschwindigkeit betrug jedoch 3500 m/min, die Extrusionsgeschwindigkeit war 5,6 m/min.

Faserdaten: Titer 36 dtex, Feinheitsfestigkeit 48 cN/tex; Dehnung: 73 %.

### Beispiel 18

Beispiel 14 wurde wiederholt, die Fadenabzugsgeschwindigkeit betrug jedoch 6000 m/min, die Extrusionsgeschwindigkeit war 9,8 m/min.

Faserdaten: Titer 36 dtex, Feinheitsfestigkeit 50 cN/tex; Dehnung: 65 %.

### Beispiel 19

Beispiel 9 wurde wiederholt, es wurde jedoch das Polymerpulver aus Beispiel 3 granuliert (Temperaturen: Einzug 150°C, 240°C, 240°C, 270°C und 260°C (Düsenplatte), Massetemperatur 250°C, 250 Upm der Extruderschnecken) und für die Spinnversuche eingesetzt, wobei die Temperatur der Formmasse am Spinndüsenpaket 200°C betrug.

### Daten der Formmasse:

MFI (230/2,16) = 52 g/10 min;
KDH (358 N) = 70 Nmm⁻²;
Zug-E-Modul (Sekante) 1400 Nmm⁻²;
Izod Schlagzähigkeit 100 mJmm⁻²;
NG = 4,0.

Faserdaten: Titer 36 dtex; Feinheitsfestigkeit 40 cN/tex; Dehnung: 100 %.

### Beispiel 20 bis 24

Beispiel 19 wurde wiederholt, es wurden jedoch die Polymerpulver der Beispiele 4 bis 8 verwendet.

Herstellung der Formmassen:

| Beispiel | Polymer aus Beispiel | Extruderparameter Temperaturen (°C) | | | | | Schnecken | Masse-temperatur |
|---|---|---|---|---|---|---|---|---|
| | | Einzug | Zone I | Zone II | Zone III | Düse | Upm (°C) | |
| 20 | 4 | 150 | 220 | 260 | 270 | 260 | 250 | 260 |
| 21 | 5 | 140 | 210 | 260 | 270 | 260 | 250 | 255 |
| 22 | 6 | 150 | 220 | 260 | 270 | 260 | 250 | 265 |
| 23 | 7 | 150 | 220 | 250 | 250 | 250 | 300 | 250 |
| 24 | 8 | 150 | 220 | 280 | 280 | 260 | 250 | 270 |

Daten der Formmassen:

| Beispiel | MFI (230/2,16) [g/19 min] | KDH (358 N) [Nmm⁻²] | Zug-E-Modul [Nmm⁻²] | NG |
|---|---|---|---|---|
| 20 | 31 | 82 | 1750 | 3,5 |
| 21 | 32 | 65 | 1450 | 4,0 |
| 22 | 16 | 79 | 1700 | 3,0 |
| 23 | 40 | 64 | 1300 | 3,2 |
| 24 | 305 | 90 | 1800 | 3,7 |

Die Spinnversuche wurde mit einer Fadenabzugsgeschwindigkeit von 2800 m/min und einer Extrusionsgeschwindigkeit von 4,5 m/min durchgeführt. Die Formmassetemperatur an den Spinndüsen war in Beispiel 20 und 22 225°C, im Falle von Beispiel 21 und Beispiel 24 205°C und im Falle von Beispiel 23 185°C.

Daten der hergestellten Fasern:

| Beispiel | Titer [dtex] | Feinheitsfestigkeit [cN/tex] | Dehnung [%] |
|---|---|---|---|
| 20 | 36 | 47 | 80 |
| 21 | 36 | 39 | 96 |
| 22 | 36 | 46 | 85 |
| 23 | 36 | 40 | 90 |
| 24 | 36 | 46 | 78 |

### Beispiel 25

Es wurde ein Polymer analog zu Beispiel 1 hergestellt, es wurden jedoch 4,0 mg rac-Dimethylsilylbis(2-methyl-4-(1-naphthyl)-1-indenyl)zirkondichlorid als Metallocen verwendet, die Polymerisationstemperatur betrug 65°C, die Polymerisationszeit war 6 h und der Wasserstoffgehalt im Reaktor betrug 6,0 ± 0,2 Vol.-%.
Es wurden 23,4 kg Polymerpulver erhalten.

Am Pulver wurden folgende Daten gemessen:
MFI (230/2,16) = 1000 g/10 min; VZ = 71 cm³/g; M_{w} = 75400 g/mol, M_{w}/Mₙ = 2,0; Schmelzpunkt 165°C, II = 99,5 %.

Analog zu Beispiel 9 wurde aus dem Pulver durch Extrusion eine erfindungsgemäße Formmasse hergestellt. Die Massetemperatur betrug dabei 245°C, die Extruderschnecken wurden mit 300 Upm betrieben. Zur Messung der mechanischen Daten wurden normgemäße Formkörper im Spritzgußverfahren hergestellt.

An diesen Formkörpern wurden folgende mechanische Daten ermittelt:
MFI (230/2,16) = 990 g/10 min; KDH (358 N) = 110 Nmm⁻²; Zug-E-Modul (Sekante) = 1925 Nmm⁻²; NG = 3,5.

Die Verarbeitbarkeit der Formmasse wurde analog zu Beispiel 9 an einer Laborspinnanlage geprüft.

Es wurde mit einer Abzugsgeschwindigkeit von 6000 m/min gearbeitet. Die Extrusionsgeschwindigkeit war 9,8 m/min, der Schmelzeverzug betrug somit 612. Die Temperatur der Formmasse am Spinndüsenpaket betrug 180°C.

An der Faser wurden folgende Daten gemessen:
Titer: 36 dtex; Feinheitsfestigkeit: 50 cN/tex; Dehnung: 69 %.

### Beispiel 26

Es wurde verfahren wie in Beispiel 25, in der Polymerisation wurde jedoch das Metallocen rac-Dimethylsilylbis(2-methyl-4,5-benzo-1-indenyl)zirkondichlorid verwendet und der Wasserstoffgehalt im Reaktor betrug 4,2 ± 0,1 Vol.-%.

Am Pulver wurden folgende Daten ermittelt:
MFI (230/2,16) = 978 g/10 min; VZ = 75 cm³/g; M_{w} = 78400 g/mol, M_{w}/Mₙ = 2,3; Schmelzpunkt 149°C, II = 97,1 %, nᵢₛₒ = 61.

An den Formkörpern wurden folgende mechanische Daten ermittelt:
MFI (230/2,16) = 995 g/10 min; KDH (358 N) = 81 Nmm⁻²; Zug-E-Modul (Sekante) = 1690 Nmm⁻²; NG = 4,0.

Die Ergebnisse des Schnellspinnversuchs waren:
Titer 36 dtex; Feinheitsfestigkeit 48 cN/tex; Dehnung 86 %.

### Beispiel 27

Es wurde verfahren wie in Beispiel 25, in der Polymerisation wurde jedoch das Metallocen rac-Dimethylsilylbis(2-ethyl-4-phenyl-1-indenyl)zirkondichlorid verwendet und der Wasserstoffgehalt im Reaktor betrug 5,0 ± 0,2 Vol.-%.

Am Pulver wurden folgende Daten ermittelt:
MFI (230/2,16) = 920 g/10 min; Vz = 82 cm³/g; M_{w} = 80 000 g/mol, M_{w}/Mₙ = 2,1; Schmelzpunkt 163°C; II = 99.3 %.

An den Formkörpern wurden folgende mechanische Daten ermittelt:
MFI (230/2,16) = 945 g/10 min; KDH (358 N) = 105 Nmm⁻²; Zug-E-Modul (Sekante) = 1895 Nmm⁻²; NG = 3,0.

Die Ergebnisse des Schnellspinnversuchs waren:
Titer: 36 dtex; Feinheitsfestigkeit 49 cN/tex; Dehnung 73 %.

Die Beispiele 25 bis 27 belegen die hervorragende Verarbeitbarkeit und die sehr guten Produkteigenschaften der niedermolekularen erfindungsgemäßen Polymere, insbesondere überzeugen die sehr hohen Abzugsgeschwindigkeiten und die vergleichweise niedrigen Temperaturen am Spinndüsenpaket, sowie die shr hohe Feinheitsfestigkeit.

## Patentansprüche

1. Verwendung einer Polyolefinformmasse, im wesentlichen bestehend aus einem Polyolefin, welches aus einem Olefin mit mindestens 3 C-Atomen der Formel R^{a}-CH = CH-R^{b}, worin R^{a} und R^{b} gleich oder verschieden sind und Wasserstoff oder C₁-C₁₅-Alkyl, geradkettig oder verzweigt, bedeuten oder R^{a} und R^{b} mit den sie verbindenden Atomen ein Ringsystem bilden, und 0 bis 10 Gew.-% Ethylen oder eines zweiten Olefins mit obengenannter Bedeutung als Comonomer besteht, dadurch gekennzeichnet, daß der MFI (230/2,16) von 5 bis 1000 g/10 min, der MFI (230/5) von 15 bis 3000 g/10 min, die Molmasse M_{w} von 75 000 bis 350 000 g/mol, die Polydispersität M_{w}/Mₙ von 1,8 bis 3,5, die Viskositätszahl von 70 bis 300 cm³/g, der Schmelzpunkt von 120 bis 165°C und die isotaktische Blocklänge von 25 bis 150 beträgt, und einem etherextrahierbaren Anteil der kleiner ist als 2 Gew.-%, bezogen auf die Gesamtmasse des Polymers. Zur Herstellung von Fasern, Filamenten und Vliesen.

2. Verwendung einer Polyolefinformmasse gemäß Anspruch 1, dadurch gekennzeichnet, daß die Polyolefinformmasse 0 bis 10 Gew.-%, eines zweiten Olefins mit oben genannter Bedeutung oder 0 bis 10 Gew.-% Ethylen enthält.

3. Verwendung einer Polyolefinformmasse gemäß Anspruch 1 oder 2, dadurch gekennzeichnet, daß das Polyolefin Polypropylen ist.

4. Verwendung einer Polyolefinformmasse gemäß einem oder mehreren der Ansprüche 1 bis 3, dadurch gekennzeichnet, daß sie zusätzlich Nukleierungsmittel, Stabilisatoren, Antioxidantien, UV-Absorber, Lichtschutzmittel, Metalldesaktivatoren, Radikalfänger, Gleitmittel, Emulgatoren, Pigmente, optische Aufheller, Flammschutzmittel oder Antistatika enthält.

5. Fasern, Filamente oder Vliese, herstellbar aus einer Formmasse gemäß einem oder mehreren der Ansprüche 1 bis 4, mittels Schmelzspinnverfahren.

6. Fasern, Filamente oder Vliese, herstellbar aus einer Formmasse gemäß einem oder mehreren der Ansprüche 1 bis 4 mittels Schmelzschnellspinnverfahren.

## Claims

1. The use of a polyolefin molding composition consisting essentially of a polyolefin formed from an olefin having at least 3 carbon atoms of the formula R^{a}-CH = CH-R^{b}, where R^{a} and R^{b} are identical or different and each is hydrogen or C₁-C₁₅-alkyl, straight-chain or branched, or R^{a} and R^{b} together with the atoms joining them together form a ring system, and from 0 to 10% by weight of ethylene or of a second olefin having the abovementioned meaning as comonomer, characterized by a 230/2.16 MFI from 5 to 1000 g/10 min, a 230/5 MFI from 15 to 3000 g/10 min, a molecular weight (M_{w}) from 75,000 to 350,000 g/mol, a polydispersity (M_{w}/Mₙ) from 1.8 to 3.5, a viscosity number from 70 to 300 cm³/g, a melting point from 120 to 165°C, an isotactic block length from 25 to 150, and ether extractables less than 2% by weight, based on the total weight of the polymer, for producing fibers, filaments and webs.

2. The use of a polyolefin molding composition as set forth in claim 1 comprising from 0 to 10% by weight of a second olefin having the abovementioned definition or from 0 to 10% by weight of ethylene.

3. The use of a polyolefin molding composition as set forth in claim 1 or 2 wherein the polyolefin is polypropylene.

4. The use of a polyolefin molding composition as set forth in one or more of claims 1 to 3 further comprising nucleating agents, stabilizers, antioxidants, UV absorbers, photoprotectants, metal deactivators, free-radical scavengers, glidants, emulsifiers, pigments, optical brighteners, flame retardants or antistats.

5. Fibers, filaments or webs producible from a molding composition as set forth in one or more of claims 1 to 4 by melt spinning.

6. Fibers, filaments or webs producible from a molding composition as set forth in one or more of claims 1 to 4 by high speed melt spinning.

## Revendications

1. Utilisation d'une masse à mouler en polyoléfine, qui se compose essentiellement d'une polyoléfine, qui se compose d'une oléfine comportant au moins 3 atomes de carbone de la formule R^{a}-CH=CH-R^{b}, dans laquelle R^{a} et R^{b} sont identiques ou différents et représentent chacun un atome d'hydrogène ou un radical alkyle en C₁ à C₁₅, linéaire ou ramifié, ou bien R^{a} et R^{b} forment un système cyclique avec les atomes qui les relient, et de 0 à 10% en poids d'éthylène ou d'une seconde oléfine de la signification susmentionnée à titre de comonomère, caractérisée en ce que le MFI (230/2,16) varie de 5 à 1000 g/10 min, le MFI (230/5) varie de 15 à 3000 g/10 min, la masse molaire Mp varie de 75000 à 35000 g/mole, la polydispersité Mₚ/Mₙ varie de 1,8 à 3,5, l'indice de viscosité varie de 70 à 300 cm²/g, le point de fusion varie de 120 à 165°C et la longueur de la séquence isotactique varie de 25 à 150, et possède un fraction extractible à l'éther qui est inférieure à 2% en poids par rapport à la masse totale du polymère, en vue de la fabrication de fibres, de filaments et de nappes ou mats.

2. Utilisation d'une masse à mouler en polyoléfine suivant la revendication 1, caractérisée en ce que la masse à mouler en polyoléfine contient de 0 à 10% en poids d'une seconde oléfine de la signification susmentionnée ou 0 à 10% en poids d'éthylène.

3. Utilisation d'une masse à mouler en polyoléfine suivant la revendication 1 ou 2, caractérisée en ce que la polyoléfine est du polypropylène.

4. Utilisation d'une masse à mouler en polyoléfine suivant une ou plusieurs des revendications 1 à 3, caractérisée en ce qu'elle contient complémentairement des agents de nucléation, des stabilisateurs, des antioxydants, des agents absorbant les UV, des agents photoprotecteurs, des désactivateurs de métaux, des capteurs de radicaux, des agents lubrifiants, des émulsifs, des pigments, des agents d'azurage optique, des agents ignifugeants, ou des agents antistatiques.

5. Fibres, filaments ou nappes ou mats, que l'on peut fabriquer à partir d'une masse à mouler suivant une ou plusieurs des revendications 1 à 4, à l'aide de procédés de filage à l'état fondu.

6. Fibres, filaments ou nappes ou mats, que l'on peut fabriquer à partir d'une masse à mouler suivant une ou plusieurs des revendications 1 à 4, à l'aide de procédés de filage rapide à l'état fondu.
